# EUROPEAN PATENT SPECIFICATION

(11) **EP 2 210 013 B1**
(45) Date of publication and mention of the grant of the patent: **14.12.2011**
(21) Application number: 08839996.9
(22) Date of filing: 14.10.2008
(51) Int. Cl.: F16G 13/06

(54) **DRIVING CHAIN**
ANTRIEBSKETTE
CHAINE DE TRANSMISSION

(30) Priority: 19.10.2007 IT FI20070226
(43) Date of publication of application: 28.07.2010
(73) Proprietor: F.LLI Fiaschi S.N.C. di Fiaschi Ing. Piero e C., 50013 Campi Bisenzio (IT)
(72) Inventor: FIASCHI, Piero, I-55049 Viareggio (IT)
(74) Representative: Colò, Chiara
(86) International application number: PCT/IB2008/002800
(87) International publication number: WO 2009/050579

(56) References cited:
- EP-A- 0 289 728
- EP-B- 1 208 258
- DD-A5- 297 213
- US-A- 3 951 783
- US-A- 5 077 965
- US-B1- 6 485 185

## Description

### Technical Field Of the Invention:

The present invention relates to a driving chain.

In particular, the present invention relates to a chain for use in the textile production lines for transferring fabrics within drying ovens or along a series of working stations.

### State of the art:

As well known, the driving chains are made up of a plurality of links pivotally coupled to each other to form a single row.

Each link exhibits a pair of respectively facing support plates, and a pair of rolling bearings pivoted between the plates and disposed in correspondence of opposite ends of the same plates.

In this way, the bearings result closed between the two support plates and free to rotate about respective parallel axes.

The links are further coupled to each other by suitable joint elements which also have a substantially plate-like shape, and each of which is pivotally mounted between the ends of two adjacent links. Under this conditions, the chain results flexible, suited for non-straight driving paths, and rotatable along the axes of development of each rolling bearing.

The chains roughly described above, are periodically subjected to a lubrication treatment apt to eliminate the friction between the various moving parts of the rolling bearings. The lubrification must be performed constantly, especially in case the driving chains feed fabrics through drying ovens which, owing to the high temperatures, tend to eliminate the lubrication fluid by evaporation.

The lubrication is carried out by interrupting periodically the chain's travel so as to distribute, manually or by suitable feeding members, a lubricating fluid (grease or oil) onto the moving mechanical parts.

However, such methodology brings about significant disadvantages due to the interruption of the chain advancement, with consequent slowing down of the entire textile production line.

To overcome such drawback, lubrication members are used which are directly coupled to the chain and able to dispense automatically the lubricant fluid during the same chain's travel i.e. US 5 077 965.

The said members consist generally of lubrication conduits located in correspondence of the rolling bearings and able to direct the lubricant fluid onto the same bearing.

Also such chains, however, exhibit major drawbacks.

Actually, a first major disadvantage is given by the fact that, during the motion of the chain and the consequent rotation of the bearings, the lubrication fluid is expelled out of the same chain. Such drawback is mainly due to an inefficient mechanical seal of the bearing regions to be lubricated. As a consequence, the rotation of the bearing, often at high speed, implies leak of fluid from the same bearing.

It is also to be pointed out that the lubricating fluid is delivered over the whole bearing, including the regions thereof which are not subjected to any friction with other mechanical parts. In fact, in spite of the fact that the mechanical friction parts of the bearing are located only onto the rolling balls, the lubrication fluid is distributed over the whole bearing, with consequent excessive consumption of fluid.

### Description of the invention:

In this context, the specific technical task of the present invention is a driving chain which does not exhibit the above drawbacks.

In particular, the object of the present invention is to provide a driving chain having a lubrication system able to retain the lubrication fluid only in the bearing's region of higher friction.

The above technical task and specified objects are substantially reached by providing a driving chain which comprises the technical characteristics set forth in one or more of the attached claims.

Further characteristics and advantages of the present invention will appear more clearly by the following indicative, and thus non-limiting description, of a preferred embodiment of a driving chain, as illustrated in the accompanying drawings, wherein:
- Fig_{.} 1 is a perspective view of a driving chain according to a further embodiment of the present invention;
- Fig. 2 is a lateral view of the chain shown in Fig. 1;
- Fig. 3 is a view in section taken on line AA in Fig. 2 of a constructional detail of the chain; and
- Fig. 4 is an exploded view of the constructional detail of Fig. 3 with some parts taken away to provide a better illustration of the others.

With reference to attached figures, numeral 1 indicates in the whole a driving chain according to a further embodiment of the present invention.

In particular, the chain 1 is of a type for use in the transfer of fabrics along successive stations for textile operations. For example, the chain 1 is advantageously used to drive fabrics through ovens for drying the coloring dye previously spread over the same fabrics.

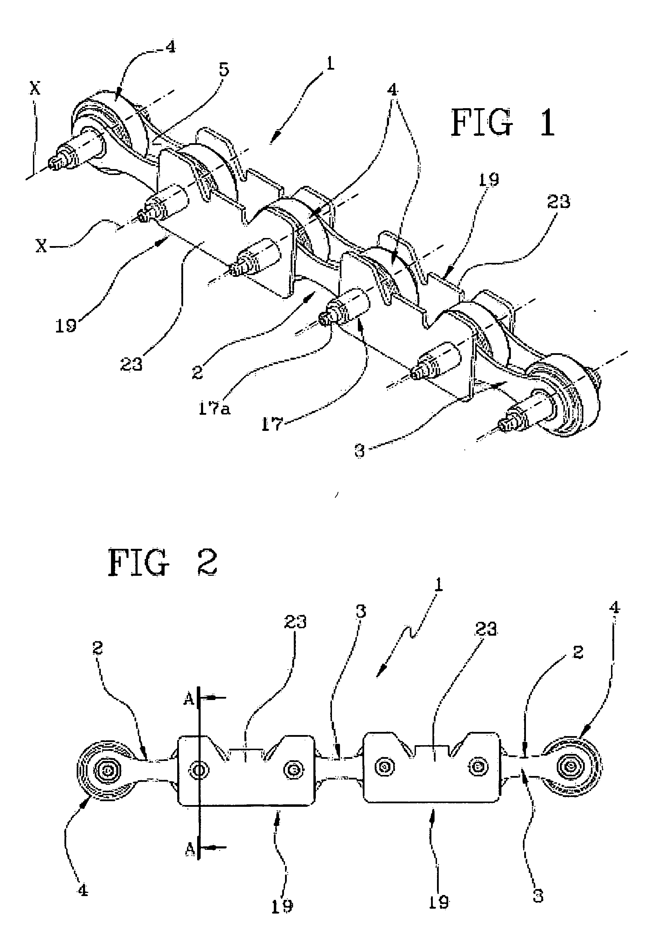

In particular, the chain 1 comprises a plurality of links 2 pivotally coupled to each other and disposed close to each other to define a single row of links 2 (Figs. 1 and 2).

Each link 2 is made up of a pair of connecting elements 3 facing each other and disposed on opposite sides of a respective pair of rolling bearings 4.

In greater details, each connecting element 3 exhibits a plate 3a having a respective inner surface facing the inner surface 5 of the plate 3a opposite thereto. Under this situation, the bearings 4 result closed between the two plates 3a, with respective opposite sides 4a facing the inner surfaces 5.

Each link 2 also comprises a pair of tubular elements 6, each of which is disposed in correspondence of a respective end of said connecting elements 3.

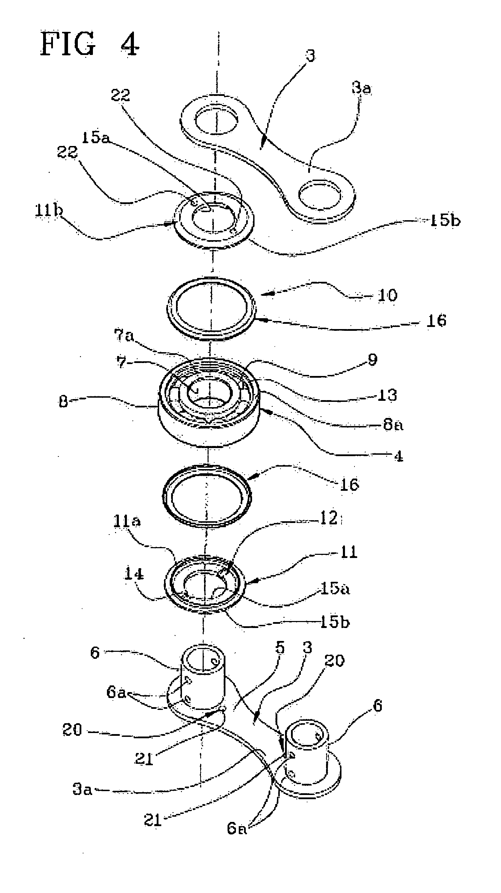

As better illustrated in Fig. 4, the tubular elements 6 have a longitudinal development perpendicular to the planar development of the connecting elements 3, and are associated therewith in correspondence of through holes formed in the same elements 3.

Under this condition, the bearings 4 of each link 2 are fitted over relevant tubular elements 6 to rotate about corresponding axes "X" parallel to each other.

It can also be noted that each tubular element 6 has one or more through holes 6a formed on respective sides thereof. In particular, in the first embodiment shown in Fig. 4, each tubular element 6 exhibits two pairs of holes 6a formed on opposite sides of the respective bearing 4.

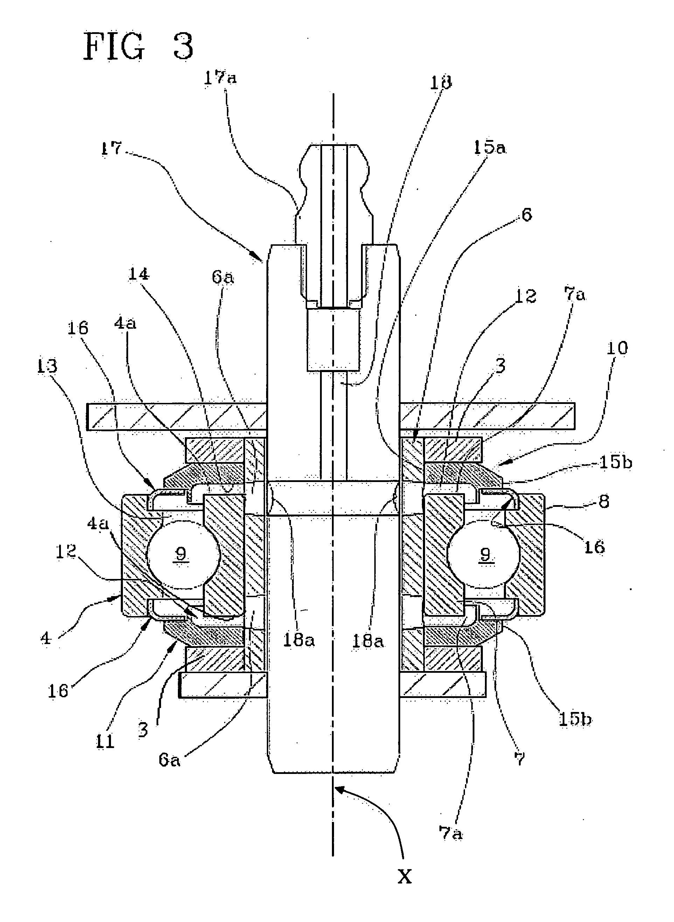

Each rolling bearing 4 comprises an inner hollow cylinder 7, pivotally associated with the respective tubular element 6, and an outer hollow cylinder 8 coaxial to the inner cylinder 7. As can be seen in Fig. 3, developed between the outer cylinder 8 and inner cylinder 7 is a set of rolling balls 9.

Again with reference to Fig. 3, each through hole 6a formed on the tubular element 6 is disposed in correspondence of a circular edge 7a of the inner cylinder 7.

The chain 1 further comprises a plurality of lubrication members 10, each of which is associated with a respective rolling bearing 4. In greater detail, the lubrication member 10 exhibits at least a sealing ring 11, also fitted on the tubular element 6 and interposed between a side 4a of bearing 4 and a respective connecting element 3. Preferably, as better shown in Figs. 3 and 4, each lubrication member 10 comprises two first sealing rings 11, disposed on opposite sides of the bearing 4 in order to associate the same bearing 4 with said connecting elements 3.

Formed on each first sealing ring 11 is at least one channel 12 for the flow of a lubricating fluid to be directed to a defined region 13 of bearing 4.

Said region 13 lies between the inner cylinder 7 and outer cylinder 8 of a respective bearing 4, that is, in correspondence of the rolling balls 9. In fact, the moving mechanical parts that need to be lubricated are only those consisting of the balls 9 and of the inner surfaces of hollow cylinders 7, 8 which are acted upon by the same balls 9.

Advantageously, each first ring 11 has two flow channels 12 formed in diametrally opposite regions of the first ring 11 to direct the lubrication fluid to two opposite portions of said defined region 13.

In greater detail, each flow channel 12 is defined by a recess 14 formed on a first surface 11a of the first ring 11 abutting against the side 4a of bearing 4.

Moreover, the recess 14 extends from an inner edge 15a of the first ring 11 to a mean portion thereof. In this situation, as can be best seen in Fig. 3, each recess 14 develops from a respective through hole 6a of the tubular element 6 of said defined region 13 of bearing 4.

The first rings 11 are maintained solid to the inner surface 5 of the respective plates 3a by a series of centering elements 20 shown in detail in Fig. 4.

Each centering element 20 comprises a portion 21 protruding from a respective element 3 and able to be inserted into a space 22 formed in a second surface 11b of the first ring 11 opposite to the first surface 11a.

In this way, each first ring 11 remains associated with the respective plate 3a with no possibility of rotating about the axes "X" during the motion of bearing 4.

According to the invention, each lubrication member 10 further comprises two second sealing rings 16 each of which engages a respective side 4a of bearing 4 and the first surface 11a of the first ring 11.

Again with reference to the sectional view of Fig. 3, it can be seen that each second ring 16 is solidly associated with an outer edge 15b of the respective first ring 11, opposite to the inner edge 15a, and with a circular edge 8a of the outer cylinder 8.

In this way, the second ring 16 defines a wall for closing the channel 12 on the respective first ring 11 to hold the lubrication fluid in the defined region 13 of bearing 4.

In particular, the closing wall defined by the second ring 16 allows preventing a leak of lubrication fluid, which is generally caused by the centrifugal force of the bearing that tends to push the fluid outwardly.

Again, the lubrication member 10 is also provided with a journal 17 developing inside the tubular element 6 and having a conduit 18 within it for the passage of the lubrication fluid.

As best illustrated in Figs. 1 and 3, the journal 17 has at least one end 17a which projects out of the respective connecting element 3 to be engaged to a source of lubrication fluid, said source being not shown in the figures since it is not part of the present invention.

In this way, the source feeds the lubrication fluid into the said conduit 18 of journal 17 to deliver the same fluid into the respective tubular element 6. Preferably, the conduit 18 has two exit mouths 18a, each of which faces at least one respective through hole 6a.

It can be noted that the flow channels 12 are in fluid communication with the conduit 18 via the through holes 6a to allow the lubrication fluid to flow from the conduit 18 to the defined region 13 of bearing 4.

The chain 1 further comprises a plurality of joint portions 19, each of which is engaged between two adjacent links 2. Preferably, as illustrated in Figs. 1 and 2, the joint portions 19 are made up of laminae 23 hinged between the ends of connecting elements 3 respectively disposed close to each other.

The invention solves the problems found in the prior art and achieves the intended objects.

First of all, it is pointed out that the flow channels 12 formed on each first ring 11 convey the lubrication fluid only into the defined region 13 of the bearing 4.

In this way, the lubrication fluid is used only in the bearing's regions without friction, which implies a significant saving of same fluid.

Moreover, the second sealing ring 16 provides for holding the lubrication fluid only in said region 13 by preventing the same fluid from escaping out of the bearing. In other words, the second ring 16, which is interposed between the first ring 11 and the bearing 4, allows improving the fluid seal in correspondence of the peripheral region of the bearing 4, thereby avoiding that the rotation of the latter will cause the lubrication fluid to be ejected outwardly.

## Claims

1. Driving chain comprising:
- a plurality of links (2) pivotally coupled to each other to define a single row of links (2);
- each link (2) exhibiting a pair of connecting elements (3) facing one another, and a pair of rolling bearings (4) pivoted between the connecting elements (3) to rotate about respective parallel axes (X); and
- a plurality of lubrication members (10) each of which being associated with a respective rolling bearing (4), said lubrication members (10) comprising a first sealing ring (11) interposed between a side (4a) of the bearing (4) and a respective connecting element (3), and at least a flow channel (12) to direct a lubrication fluid to a defined region (13) of the bearing (4);
**characterized in that** each lubrication member (10) comprises at least a second sealing ring (16) engaged between a respective side (4a) of said bearing (4) and a first surface (11a) of said first sealing ring (11) abutting against the side (4a) of bearing (4); said flow channel (12) comprising a recess (14) formed in the first surface (11a) of the first ring (11)and extending from an inner edge (15a) of the first ring (11) to a mean portion of the same first ring (11).

2. Chain according to claim 1, wherein said second ring (16) defines a closing wall of said channel (12) disposed on said first ring (11) to hold the lubrication fluid in said defined region (13) of said bearing (4).

3. Chain according to any of the preceding claims, **characterized in that** the lubrication member (10) comprises two first sealing rings (11) each of which having at least one flow channel (12); said first sealing rings being disposed at respective opposite sides (4a) of the rolling bearing (4).

4. Chain according to claim 3, **characterized in that** each first sealing ring (11) has two flow channels (12) disposed at diametrally opposite regions of the first ring (11).

5. Chain according to any of the preceding claims, **characterized in that** said second ring (16) is associated with an outer edge (15b) of the respective first ring (11), opposite to said inner edge (15a), to hold said lubrication fluid in the defined region (13) of the bearing (4).

6. Chain according to the preceding claim, **characterized in that** said rolling bearing (4) comprises: an inner hollow cylinder (7), an outer hollow cylinder (8) coaxial to said inner cylinder (7) and a set of balls (9) interposed between said inner cylinder (7) and outer cylinder (8); each second ring (16) being engaged to a circular edge (8a) of the outer cylinder (8) to define said region (13) in correspondence of the balls (9).

7. Chain according to the preceding claim, **characterized in that** each link (2) further comprises a pair of tubular elements (6) disposed between said connecting elements (3) and each of which develops at least partially within said inner hollow cylinder (7) of a respective bearing (4); said tubular element (6) exhibiting a set of through holes (6a) each of which is disposed in correspondence of a circular edge (7a) of the inner hollow cylinder (7).

8. Chain according to the preceding claim, **characterized in that** each through hole (6a) is made to face a respective flow channel (12) formed on the first ring (11).

9. Chain according to claim 6 or 7, **characterized in that** each lubrication member (10) comprises also a journal (17) developing in said tubular element (6) and exhibiting a conduit (18) therein for the passage of lubrication fluid; said flow channels (12) being in fluid communication with the conduit (18) via said through holes (6a) to allow the passage of lubrication fluid from the conduit (18) to the defined region (13) of the bearing (4).

10. Chain according to the preceding claim, **characterized in that** said journal (17) has at least one end (17a) protruding out of one of said connecting elements (3) and engageable to a source which feeds the lubrication fluid.

11. Chain according to any of the preceding claims, **characterized in that** it further comprises a set of centering elements (20) of said first sealing rings (11) to keep the same rings (11) solid to said connecting elements (3).

12. Chain according to the preceding claim, **characterized in that** each centering element (20) comprises a portion (21) protruding from a respective connecting element (3) and able to be inserted into a space (22) formed in a second surface (11b) of said first ring (11) opposite to the first surface (11a).

13. Chain according to the preceding claim, **characterized in that** each connecting element (3) comprises a plate (3a) having respective opposite ends engaged to respective tubular elements (6); each plate (3a) having an inner surface (5) facing said rolling bearings (4) and abutting against the second surface (11b) of each first ring (11).

14. Chain according to any of the preceding claims, **characterized in that** it further comprises a plurality of joint portions (19), each of which is engaged between two adjacent links (2).

## Patentansprüche

1. Antriebskette, Folgendes beinhaltend:
- mehrere Glieder (2), die drehbar miteinander verbunden sind, um eine einzige Reihe von Gliedern (2) zu bilden;
- wobei jedes Glied (2) ein Paar einander zugewandte Verbindungselemente (3) aufweist und ein Paar Wälzlager (4) aufweist, die drehbar zwischen den Verbindungselementen (3) gelagert sind, so dass sie sich um entsprechende parallele Achsen (X) drehen; und
- mehrere Schmiereinrichtungen (10), die jeweils mit einem entsprechenden Wälzlager (4) verbunden sind, wobei die Schmiereinrichtungen (10) einen ersten Dichtring (11) beinhalten, der zwischen einer Seite (4a) des Lagers (4) und einem entsprechenden Verbindungselement (3) angeordnet ist, und mindestens einen Fließkanal (12) beinhalten, der dazu dient, eine Schmierflüssigkeit an einen vorbestimmten Bereich (13) des Lagers (4) zu leiten;
**dadurch gekennzeichnet, dass** jede Schmiereinrichtung (10) mindestens einen zweiten Dichtring (16) beinhaltet, der zwischen einer entsprechenden Seite (4a) des Lagers (4) und einer ersten Oberfläche (11a) des ersten Dichtrings (11) angeordnet ist und gegen die Seite (4a) des Lagers (4) anliegt; wobei der Fließkanal (12) eine Aussparung (14) aufweist, die in der ersten Oberfläche (11a) des ersten Rings (11) ausgebildet ist und sich von einem inneren Rand (15a) des ersten Rings (11) zu einem mittleren Abschnitt dieses ersten Rings (11) erstreckt.

2. Kette nach Anspruch 1, worin der zweite Ring (16) eine Abschlusswand für den Kanal (12) bildet, die auf dem ersten Ring (11) angeordnet ist, um die Schmierflüssigkeit in dem vorbestimmten Bereich (13) des Lagers (4) zu halten.

3. Kette nach einem der vorhergehenden Ansprüche, **dadurch gekennzeichnet, dass** die Schmiereinrichtung (10) zwei erste Dichtringe (11) beinhaltet, von denen jeder mindestens einen Fließkanal (12) aufweist; wobei die ersten Dichtringe an entsprechenden einander gegenüberliegenden Seiten (4a) des Wälzlagers (4) angeordnet sind.

4. Kette nach Anspruch 3, **dadurch gekennzeichnet, dass** jeder erste Dichtring (11) zwei Fließkanäle (12) aufweist, die an diametral gegenüberliegenden Bereichen des ersten Rings (11) angeordnet sind.

5. Kette nach einem der vorhergehenden Ansprüche, **dadurch gekennzeichnet, dass** der zweite Ring (16) mit einem äußeren Rand (15b) des entsprechenden ersten Rings (11) verbunden ist, die dem genannten inneren Rand (15a) gegenüberliegt, um die Schmierflüssigkeit in dem vorbestimmten Bereich (13) des Lagers (4) zu halten.

6. Kette nach dem vorhergehenden Anspruch, **dadurch gekennzeichnet, dass** das Wälzlager (4) einen inneren Hohlzylinder (7), einen äußeren Hohlzylinder (8), der koaxial zu dem inneren Zylinder (7) ist, und eine Reihe von Kugeln (9) beinhaltet, die zwischen dem inneren Zylinder (7) und dem äußeren Zylinder (8) angeordnet sind; wobei jeder zweite Ring (16) mit einem kreisförmigen Rand (8a) des äußeren Zylinders (8) in Eingriff steht, um den vorbestimmten Bereich (13) bei den Kugeln (9) zu bilden.

7. Kette nach dem vorhergehenden Anspruch, **dadurch gekennzeichnet, dass** jedes Glied (2) ferner ein Paar rohrförmiger Elemente (6) beinhaltet, die zwischen den Verbindungselementen (3) angeordnet sind und von denen sich jedes zumindest teilweise innerhalb des inneren Hohlzylinders (7) eines entsprechenden Lagers (4) erstreckt; wobei das rohrförmige Element (6) eine Reihe Durchgangsbohrungen (6a) aufweist, von denen jede an einem kreisförmigen Rand (7a) des inneren Hohlzylinders (7) angeordnet ist.

8. Kette nach dem vorhergehenden Anspruch, **dadurch gekennzeichnet, dass** jede Durchgangsbohrung (6a) jeweils einem entsprechenden Fließkanal (12) zugewandt ist, der auf dem ersten Ring (11) ausgebildet ist.

9. Kette nach Anspruch 6 oder 7, **dadurch gekennzeichnet, dass** jede Schmiereinrichtung (10) ferner einen Achszapfen (17) beinhaltet, der sich in dem rohrförmigen Element (6) erstreckt und in seinem Innern eine Leitung (18) für den Durchgang der Schmierflüssigkeit aufweist; wobei die Fließkanäle (12) über die Durchgangsbohrungen (6a) in Fluidverbindung mit der Leitung (18) stehen, um das Durchfließen der Schmierflüssigkeit von der Leitung (18) in den vorbestimmten Bereich (13) des Lagers (4) zu ermöglichen.

10. Kette nach dem vorhergehenden Anspruch, **dadurch gekennzeichnet, dass** der Achszapfen (17) zumindest ein Ende (17a) aufweist, das aus einem der Verbindungselemente (3) hervorragt und mit einer Zuführquelle für die Schmierflüssigkeit in Eingriff gebracht werden kann.

11. Kette nach einem der vorhergehenden Ansprüche, **dadurch gekennzeichnet, dass** sie ferner eine Reihe von Elementen (20) zur Zentrierung der ersten Dichtringe (11) beinhaltet, um diese Ringe (11) fest mit den Verbindungselementen (3) verbunden zu halten.

12. Kette nach dem vorhergehenden Anspruch, **dadurch gekennzeichnet, dass** jedes Zentrierelement (20) einen Abschnitt (21) beinhaltet, der von einem entsprechenden Verbindungselement (3) hervorragt und in eine Aufnahme (22) eingeführt werden kann, die auf einer zweiten Oberfläche (11b) des ersten Rings (11), die der ersten Oberfläche (11a) gegenüberliegt, ausgebildet ist.

13. Kette nach dem vorhergehenden Anspruch, **dadurch gekennzeichnet, dass** jedes Verbindungselement (3) eine Platte (3a) beinhaltet, die entsprechende einander gegenüberliegende Enden aufweist, die mit entsprechenden rohrförmigen Elementen (6) in Eingriff stehen; wobei jede Platte (3a) eine innere Oberfläche (5) aufweist, die dem Wälzlager (4) zugewandt ist und gegen die zweite Oberfläche (11b) jedes ersten Ringes (11) anliegt.

14. Kette nach einem der vorhergehenden Ansprüche, **dadurch gekennzeichnet, dass** sie ferner mehrere Anschlussstücke (19) beinhaltet, die jeweils zwischen zwei benachbarten Gliedern (2) mit Zapfen angebracht sind.

## Revendications

1. Une chaîne de transmission comprenant :
une pluralité de maillons (2) reliés entre eux de manière pivotante et définissant une seule rangée de maillons (2) ;
chaque maillon (2) présentant un couple d'éléments de liaison (3) face à face, et un couple de roulements (4) pivotant entre lesdits éléments de liaison (3) de manière à tourner autour de leurs axes (X) respectifs parallèles ; et
une pluralité d'organes de lubrification (10), chacun desquels étant associé à un roulement (4) respectif,
lesdits organes de lubrification (10) comprenant une première bague d'étanchéité (11) intercalée entre une face (4a) du roulement (4) et un élément de liaison (3) correspondant ainsi qu'au moins un canal d'écoulement (12) pour diriger un fluide de lubrification dans une zone prédéfinie (13) du roulement (4) ;
**caractérisée en ce que** chaque organe de lubrification (10) comprend au moins une seconde bague d'étanchéité (16) engagée dans une face (4a) respective dudit roulement (4) et une première surface (11a) de ladite première bague d'étanchéité (11) butant contre la face (4a) du roulement (4) ; ledit canal d'écoulement (12) comprenant un renfoncement (14) réalisé dans une première surface (11a) de la première bague (11) et s'étendant entre le bord interne (15a) de la première bague (11) et une portion intermédiaire de ladite première bague (11).

2. La chaîne selon la revendication 1, où ladite seconde bague (16) définit une paroi de fermeture dudit canal (12) sur ladite première bague (11), afin de maintenir le fluide de lubrification dans ladite zone prédéfinie (13) dudit roulement (4).

3. La chaîne selon l'une quelconque des revendications précédentes, **caractérisée en ce que** chaque organe de lubrification (10) comprend deux premières bagues d'étanchéité (11) présentant chacune au moins un canal d'écoulement (12) ; lesdites premières bagues d'étanchéité étant disposées sur les faces opposées (4a) respectives du roulement (4).

4. La chaîne selon la revendication 3, **caractérisée en ce que** chaque première bague d'étanchéité (11) présente deux canaux d'écoulement (12) situés dans des zones diamétralement opposées de la première bague (11).

5. La chaîne selon l'une quelconque des revendications précédentes, **caractérisée en ce que** ladite seconde bague (16) est associée à un bord externe (15b) de la première bague (11) respective, opposé audit bord interne (15a), de manière à maintenir ledit fluide de lubrification dans la zone prédéfinie (13) du roulement (4).

6. La chaîne selon la revendication précédente, **caractérisée en ce que** ledit roulement (4) comprend :
un cylindre creux interne (7), un cylindre creux externe (8) coaxial audit cylindre interne (7), et une série de billes (9) intercalées entre ledit cylindre interne (7) et ledit cylindre externe (8) ; chaque seconde bague (16) étant engagée dans un bord circulaire (8a) du cylindre externe (8) pour définir ladite zone (13) au niveau des billes (9).

7. La chaîne selon la revendication précédente, **caractérisée en ce que** chaque maillon (2) comprend également un couple d'éléments tubulaires (6) disposés entre lesdits éléments de liaison (3) et se développant chacun, au moins partiellement, à l'intérieur dudit cylindre creux interne (7) d'un roulement (4) respectif ; ledit élément tubulaire (6) présentant une série de trous débouchants (6a), disposés chacun en correspondance d'un bord circulaire (7a) du cylindre interne creux (7).

8. La chaîne selon la revendication précédente, **caractérisée en ce que** chaque trou débouchant (6a) est en face d'un canal d'écoulement (12) respectif formé sur la première bague (11).

9. La chaîne selon la revendication 6 ou 7, **caractérisée en ce que** chaque organe de lubrification (10) comprend également un tourillon (17) se développant dans ledit élément tubulaire (6) et présentant, à l'intérieur, un conduit (18) pour le passage du fluide lubrification ; lesdits canaux d'écoulement (12) communiquant avec ledit conduit (18) par l'intermédiaire desdits trous débouchants (6a) afin de permettre le passage du fluide de lubrification entre le conduit (18) et la zone prédéfinie (13) du roulement (4).

10. La chaîne selon la revendication précédente, **caractérisée en ce que** ledit tourillon (17) présente au moins une extrémité (17a) dépassant de l'un desdits éléments de liaison (3) et pouvant s'engager dans une source d'alimentation du fluide de lubrification.

11. La chaîne selon l'une quelconque des revendications précédentes, **caractérisée en ce qu'**elle comprend également une série d'éléments de centrage (20) desdites premières bagues d'étanchéité (11) pour maintenir les bagues (11) solidaires desdits éléments de liaison (3).

12. La chaîne selon la revendication précédente, **caractérisée en ce que** chaque élément de centrage (20) comprend une portion (21) dépassant d'un élément de liaison (3) respectif et pouvant s'insérer dans un logement (22) obtenu dans une seconde surface (11b) de ladite première bague (11) opposée à la première surface (11a).

13. La chaîne selon la revendication précédente, **caractérisée en ce que** chaque élément de liaison (3) comprend une plaque (3a) dont les extrémités opposées sont engagées dans des éléments tubulaires (6) respectifs ; chaque plaque (3a) présentant une surface interne (5) en face desdits roulements (4) et battant contre la seconde surface (11b) de chaque première bague (11).

14. La chaîne selon l'une quelconque des revendications précédentes, **caractérisée en ce qu'**elle comprend également une pluralité de portions de jonction (19), pivotant chacune entre deux maillons (2) adjacents.
